(19) Europäisches Patentamt / European Patent Office / Office européen des brevets

(11) **EP 2 070 804 B1**

(12) **EUROPEAN PATENT SPECIFICATION**

(45) Date of publication and mention
of the grant of the patent:
**16.05.2012 Bulletin 2012/20**

(51) Int Cl.:
*B62D 6/00* *(2006.01)*    *B62D 5/04* *(2006.01)*
*B62D 5/07* *(2006.01)*    *B62D 5/22* *(2006.01)*
*B62D 101/00* *(2006.01)*    *B62D 113/00* *(2006.01)*
*B62D 119/00* *(2006.01)*    *B62D 137/00* *(2006.01)*

(21) Application number: **07828913.9**

(22) Date of filing: **01.10.2007**

(86) International application number:
**PCT/JP2007/069173**

(87) International publication number:
**WO 2008/041668 (10.04.2008 Gazette 2008/15)**

(54) **VEHICLE STEERING DEVICE**

FAHRZEUGLENKVORRICHTUNG

DISPOSITIF DE DIRECTION DE VEHICULE

(84) Designated Contracting States:
**DE FR**

(30) Priority: **03.10.2006 JP 2006272095**

(43) Date of publication of application:
**17.06.2009 Bulletin 2009/25**

(73) Proprietor: **JTEKT Corporation**
**Osaka-shi**
**Osaka 542-8502 (JP)**

(72) Inventors:
• **HIGASHI, Kenji**
  **Osaka-shi, Osaka 542-8502 (JP)**
• **YAMANAKA, Kosuke**
  **Osaka-shi, Osaka 542-8502 (JP)**
• **ISHIHARA, Atsushi**
  **Osaka-shi, Osaka 542-8502 (JP)**
• **MAEDA, Daisuke**
  **Osaka-shi, Osaka 542-8502 (JP)**

• **NAKA, Masami**
  **Osaka-shi, Osaka 542-8502 (JP)**
• **KADA, Tomoyasu**
  **Osaka-shi, Osaka 542-8502 (JP)**

(74) Representative: **Steil, Christian et al**
**Witte, Weller & Partner**
**Postfach 10 54 62**
**70047 Stuttgart (DE)**

(56) References cited:
EP-A2- 1 564 108        WO-A1-2005/063550
WO-A1-2005/100132       JP-A- 11 107 936
JP-A- 57 209 469        JP-A- 2003 335 248
JP-A- 2004 122 827      JP-A- 2004 122 827
JP-A- 2005 225 421      JP-A- 2005 225 421
JP-A- 2006 035 930      JP-A- 2006 035 930
JP-A- 2006 036 124      JP-A- 2006 036 124
JP-A- 2006 168 649      JP-A- 2006 168 649
JP-A- 2006 231 947      US-A1- 2006 185 928

**Description**

Field of the Invention

The present invention relates to a motor vehicle steering apparatus according to the preamble of claim 1, as known from JP-2004-122827 A.

Description of Related Art

There has been proposed a motor vehicle steering apparatus for performing a so-called active steering In which by control of an actuator, a ratio between the steering angle of a steering member such as a steering wheel and the steered angle of a steered wheel is changed, and the steered angle is thereby changed irrespective of a driver's intention. For example, if a motor vehicle is in an over-steering state as a result of traveling along a snow-covored road, a motor vehicle posture can be stabilized by performing active steering so that the steered angle is changed in a direction opposite to a steering direction of a steering member.

Usually, in a motor vehicle (a full-sized vehicle, a luxury vehicle, etc.) mounted with an active steering function, a large steering assist force is required, and thus, it is suitable to combine a hydraulic power steering mechanism that provides large output.
There has been proposed a motor vehicle steering apparatus mounted thereon with the hydraulic power steering mechanism and a transmission-ratio variable mechanism.

However, a steering gear ratio is varied by working of the transmission-ratio variable mechanism, and thus, a flow rate of a working fluid required by the power cylinder is changed. When a discharge flow rate of a hydraulic pressure pump of the hydraulic power steering mechanism becomes insufficient for the required flow rate, generated steering assist force also becomes insufficient. As a result, a force required for operating a steering member such as a steering wheel becomes excessive, and thus, steering feeling may become degraded.

On the other hand, , the discharge flow rate can be set according to a case where the steering gear ratio is set to the quickest side by means of the transmission-ratio variable mechanism. However, in this case, most of the discharge flow rate of the hydraulic pressure pump is wasted, and as a result, the energy-saving effect may be restrained.
To solve such problems, there has been proposed a motor vehicle steering apparatus for controlling a flow rate control valve composed of a magnetic valve of the hydraulic power steering mechanism according to a difference between a detection ACT angle and a target ACT angle of an electric motor for changing a transmission ratio of a transmission-ratio variable mechanism (see Japanese Published Unexamined Patent Application No. 2005-225402).

In the motor vehicle steering apparatus of the Patent JP 2005 225 402 A, its application is restricted to an apparatus using a magnetic valve as a flow rate control valve. Therefore, irrespective of the use of the magnetic valve as a flow rate control valve, a motor vehicle steering apparatus having a high versatility, capable of solving the above-described problems is desired.
Further, a vehicle steering apparatus similar to that disclosed in the above-mentioned document JP-A-2004-122827, is known from document JP 2003 335248 A. Document EP 1 564 108 A2 discloses a variable gear ratio hydraulic power steering device including a steering angle sensor, a vehicle speed sensor, and a yaw rate sensor.
An electric power steering device capable of imparting steering assist torque reducing the difference between right and left steeling loads is known from document JP 2005 225421 A. Further vehicle steering systems are known from documents US 2006/0185928 A1, JP 2006 036124 A, JP 2006 035930 A, and JP 2006 168649 A.
An object of the present invention is to provide a motor vehicle steering apparatus that provides a good steering feeling and has a high degree of versatility.
This object is achieved by a motor vehicle steering apparatus as defined in claim 1.

Disclosure of the invention according to the present invention a motor vehicle steering apparatus includes: a transmission-ratio variable mechanism for changing a transmission ratio of a rotation between a first steering shaft coupled to a steering member and a second steering shaft coupled to a steering mechanism; a transmission-ratio changing motor for changing the transmission ratio of the transmission-ratio variable mechanism; a counter force compensating motor for compensating a steering counter force of the steering member caused by an operation of the transmission-ratio variable mechanism; a hydraulic steering assist mechanism; and a controller for controlling the transmission-ratio changing motor and the counter force compensating motor, in which the controller includes a function for generating a steering assist torque in the counter force compensating motor.

In this mode, the steering assist force by the counter force compensating motor is added to the steering assist force by the hydraulic steering assist mechanism. Therefore, a large steering assist force required for a motor vehicle such as a full-sized vehicle and a luxury vehicle mounted with the active steering function can be obtained, and thus, the present invention can be suitably applied to these vehicles. Further, the steering assist torque is obtained by the counter force compensating motor, and thus, the following advantages are provided: That is, as compared to the conventional apparatus where the flow rate of the hydraulic pressure pump is increased, a rise of the torque is more immediate, and therefore, a problem of the insufficient steering assist force can be reliably solved, and thereby, a good steering feeling can be provided. Further, the present invention can be applied to a wider torque band. Also, irrespective of the presence of a flow-rate control valve, the present invention can be applied to various types of hydraulic power steering apparatuses, and thus, a high versatility is provided. Moreover, a problem of the insufficient steering assist force encountered at the time of stationary steering (which is difficult to solve in the conventional apparatus where the flow rate of the hydraulic pressure pump is increased) can be solved.

In addition, the steering assist control is required when the steering assist force is insufficient, and at that time, the sufficient steering counter force has been given to the driver via the steering member, and thus, the counter force compensating control needs not to be carried out. On the other hand, the counter force compensating control is that which is required at the time of active steering such as if the motor vehicle is in an over-steering state, for example, as a result of traveling along a snow-covered road with a small road surface resistance, the steered angle is automatically changed to a direction opposite to the steering direction of the steering member (counter is automatically provided). The load at the time of such an active steering is small, and thus, the steering assist control will not be required. That is, there is no possibility that the steering assist control and the counter force compensating control are simultaneously carried out, and therefore, the steering torque is not adversely affected, resulting from the interference between both controls.

Brief Description of the Drawings

Fig. 1 is a schematic diagram showing an approximate configuration of a motor vehicle steering apparatus of one embodiment of the present invention.
Fig. 2 is a flow chart showing a flow of steering assist control by a counter force compensating motor in the motor vehicle steering apparatus in Fig. 1.
Fig. 3 is a flow chart showing a flow of steering assist control by a counter force compensating motor, in another embodiment of the present invention.
Fig. 4 is a flow chart showing a flow of steering assist control by a counter force compensating motor, in still another embodiment of the present invention.
Fig. 5 is a flow chart showing a flow of steering assist control by a counter force compensating motor, in yet still another embodiment of the present invention.
Fig. 6 is a flow chart showing a flow of steering assist control by a counter force compensating motor, in another embodiment of the present invention.
Fig. 7 is a schematic perspective view of a driving system when a hydraulic pump of a hydraulic steering assist mechanism is a hybrid drive according to the present invention.
Fig. 8 is a schematic diagram of a drive pulley and a restraining member when the drive pulley is restrained in the embodiment in Fig. 7.
Fig. 9 is a schematic diagram of a ring gear and a restraining member when the ring gear is restrained in the embodiment in Fig. 7.

Detailed Description of Preferred Embodiments

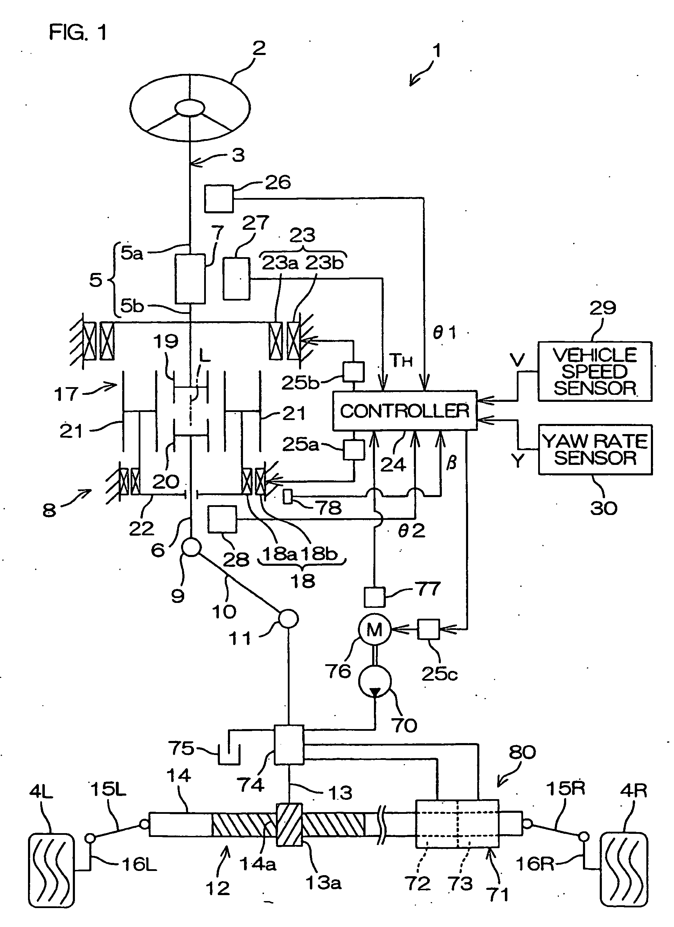

Preferred embodiments of the present invention will be described with reference to the accompanying drawings. Fig. 1 is a schematic diagram showing an approximate configuration of a motor vehicle steering apparatus of one embodiment of the present invention. With reference to Fig. 1, a motor vehicle steering apparatus 1 includes a steering member 2 such as a steering wheel and a steering shaft 3 continued to the steering member 2. The motor vehicle steering apparatus 1 applies a steering torque imparted to the steering member 2 to each of right and left steered wheels 4L and 4R (or steered members) via a steering shaft 3 (or steering shaft), etc., and performs a steering operation.

The steering shaft 3 includes a first steering shaft 5 and a second steering shaft 6 placed coaxially with the first steering shaft 5. The motor vehicle steering apparatus 1 includes a variable gear ratio function capable of changing a ratio (equivalent to a transmission ratio R (R=$\theta$2/$\theta$1)) of a rotation angle (equivalent to a steered angle $\theta$2) of the second steering shaft 6 to a rotation angle (equivalent to a steering angle $\theta$1) of the first steering shaft 5.
The first steering shaft 5 includes an input shaft 5a coupled to the steering member 2 and an output shaft 5b coupled relatively rotatably via a torsion bar 7 to the input shaft 5a.

Between the output shaft 5b of the first steering shaft 5 and the second steering shaft 6, a transmission-ratio variable mechanism 8 is arranged. The transmission-ratio variable mechanism 8 is able to change the transmission ratio R (=$\theta$2/$\theta$1) between the first steering shaft 5 and the second steering shaft 6. The second steering shaft 6 is continued via a universal joint 9, an intermediate shaft 10, a universal joint 11, and a steering mechanism 12, to the steered wheels 4L and 4R.

The steering mechanism 12 is configured by a rack and pinion mechanism. That is, the steering mechanism 12 includes a pinion shaft 13 continued to the universal joint 11 and a rack shaft 14 (as a steered shaft) which has a rack 14a meshed with a pinion 13a at the distal end of the pinion shaft 13 and which extends in right and left directions of the motor vehicle. Each end of the rack shaft 14 is coupled with the corresponding steered wheel 4L or 4R via the corresponding tie rod 15L or 15R and the corresponding knuckle arm 16L or 16R.

The motor vehicle steering apparatus 1 is configured as a hydraulic power steering apparatus. That is, the pinion shaft 13 has an input shaft and an output shaft coupled relatively rotatably to each other via the torsion bar. In the pinion shaft 13, a rotary valve 74 (as a well-known hydraulic pressure control valve) for supplying either one of a pair of oil chambers 72 and 73 of the power cylinder 71 with pressure oil from a hydraulic pressure pump 70 according to a relative rotation of the input shaft and the output shaft thereby to generate a steering assist force is arranged.

In the rotary valve 74, when the input shaft and the output shaft are relatively rotated during steering, a flow route is controlled, and thereby, the pressure oil is supplied to either one of the oil chambers 72 and 73 of the power cylinder 71 while the oil from the other one of the oil chambers 72 and 73 is fed back to a reservoir tank 75, for example. The hydraulic power steering apparatus of the present embodiment is a motor-driven pump hydraulic power steering apparatus configured to rotation-drive the hydraulic pressure pump 70 by an electric motor 76. An electric current sensor 77 for detecting an electric current passing in the electric motor 76 is arranged. By the power cylinder 71, the rotary valve 74, the hydraulic pressure pump 70, the electric motor 76, etc., a hydraulic steering assist mechanism 80 is configured.

According to the above-described configuration, the steering torque from the steering member 2 is transmitted via the first steering shaft 5, the transmission-ratio variable mechanism 8, the second steering shaft 6, etc., to the steering mechanism 12. In the steering mechanism 12, the rotation of the pinion 13a is converted to a motion in an axial direction of the rack shaft 14, and as a result, the steered wheels 4L and 4R are steered via the tie rods 15L and 15R and the knuckle arms 16L and 16R.

The transmission-ratio variable mechanism 8 includes a planetary gear mechanism 17 for providing a planetary transmission mechanism (as a differential mechanism) for coupling differentially rotatably the output shaft 5b of the first steering shaft 5 to the second steering shaft 6. A transmission-ratio changing motor 18 drives the planetary gear mechanism 17 for changing the transmission ratio.

The planetary gear mechanism 17 has: a first sun gear 19 (as a first element) that can integrally rotate with the output shaft 5b of the first steering shaft 5; a second sun gear 20 (as a second element) that can rotate integrally with the second steering shaft 6, placed in a manner that the second sun gear 20 and the first sun gear 19 are faced to each other; a planetary gear 21 (as a third element) that is meshed with both the first and second sun gears 19 and 20; and a carrier 2 2 for holding the planetary gear 21 in a manner to permit rotation around an axial line thereof and to permit revolution around the first and second sun gears 19 and 20.

The first and second sun gears 19 and 20 and the planetary gear 21 are each arranged as a rotation transmission element, and are formed by using a helical gear, for example. Inaddition, instead of the helical gear, a spur gear and any other parallel shaft gear may be used. The planetary gear 21 is for associating the first and second sun gears 19 and 20 (as the first and second elements) to each other, and a plurality of (two, in the present embodiment) planetary gears 21 are placed in a circumferential direction of the steering shaft 3. The axial line of each planetary gear 21 extends parallel with an axial line L of the steering shaft 3. The carrier 22 can rotate around the axial line L of the steering shaft 3. In the planetary gear 21, the teeth number in a portion meshed with the first sun gear 19 and that in a portion meshed with the second sun gear 20 are the same.

The teeth number of the first sun gear 10 and that of the second sun gear 20 differ from each other, and the first sun gear 10 is formed by using a profile shifted gear. The profile shifted gear is transformed in a direction in which the diameter of a pitch circle is smaller or a direction in which the same is larger.

The transmission-ratio changing motor 18 is for rotation-driving the carrier 22. When the number of rotations of the carrier 22 rotating around the axial line L is changed, the transmission ratio R can be changed. The transmission-ratio changing motor 18 is composed of a brushless motor, for example, and is placed coaxially with the steering shaft 3.

The transmission-ratio changing motor 18 includes an annular rotor 18a fixed to integrally rotate with the carrier 22 and an annular stator 18b surrounding the rotor 18a. Axial lines of the rotor 18a and the stator 18b each match the axial line L of the steering shaft 3. Further, a rotation angle sensor 78 (as rotation angle detecting means composed of a resolver, etc., for example) for detecting an ACT angle that is a motor rotation angle of the transmission-ratio changing motor 18 is arranged.

The motor vehicle steering apparatus 1 further includes a counter force compensating motor 23 (as a counter force compensating actuator) for compensating the steering counter force of the steering member 2 in association with the operation of the transmission-ratio variable mechanism 8. The counter force compensating motor 23 is composed of a brushless motor, for example, and is placed coaxially with the steering shaft 3.

The counter force compensating motor 23 includes an annular rotor 23a coupled to integrally rotate with the output shaft 5b of the first steering shaft 5 and an annular stator 23b surrounding the periphery of the rotor 23a. Axial lines of the rotor 23a and the stator 23b each match the axial line L of the steering shaft 3.

The transmission-ratio changing motor 18 and the counter force compensating motor 23 are each controlled by a controller 24 including a CPU, a RAM, and a ROM. The controller 24 is connected via a driving circuit 25a to the transmission-ratio changing motor 18 and connected via a driving circuit 25b to the counter force compensating motor 23. The controller 24 is further connected via a driving circuit 25c to the electric motor 76 for driving the hydraulic pressure pump 70.

Also, the controller 24 is connected with: a steering angle sensor 26 (steering angle detection means) ; a torque sensor 27 (steering torque detection means); a steered angle sensor 28 (steered angle detection means) ; a speed sensor 29 (vehicle speed detection means) ; a yaw rate sensor 30 (yaw rate detection means); an electric current sensor 77; and a rotation angle sensor 78 (rotation angle detection means).

From the steering angle sensor 26, as a value corresponding to the steering angle $\theta 1$ that is an operation amount from a directly advancing position of the steering member 2, a signal about the rotation angle of the first steering shaft 5 is input. From the torque sensor 27, as a value corresponding to the steering torque $T_H$ of the steering member 2, a signal about the transmission torque in the first steering shaft 5 is input. From the steered angle sensor 28, as a value corresponding to the steered angle $\theta 2$, a signal about the rotation angle of the second steering shaft 6 is input. From the speed sensor 29, a signal about a vehicle speed V is input. From the yaw rate sensor 30, a signal about a yaw rate Y of the motor vehicle is input. From the electric current sensor 77, a signal about a driving electric current of the electric motor 76 for driving the hydraulic pressure pump 70 is input. From the rotation angle sensor 78, a signal about an ACT angle ß that is the motor rotation angle of the transmission-ratio changing motor 18 is input.

The controller 24 controls driving of the transmission-ratio changing motor 18 and the counter force compensating motor 23, as described below, for example. That is, the controller 24 computes a target yaw rate $Y^*$ ($Y^*=G \times \theta 1$: G denotes a predetermined transfer function ) from the steering angle $\theta 1$ detected by the steering angle sensor 26, and computes a judgment value $A=\theta 2 \times (Y^*-Y)$ from the target yaw rate $Y^*$, and the steered angle $\theta 2$ and the yaw rate $Y^*$ detected by the steered angle sensor 28.

When the judgment value A is zero, the detected yaw rate Y and target yaw rate $Y^*$ are equal, and the motor vehicle is in a neutral steering state, the controller 24 drives the transmission-ratio changing motor 18 so that the rotation speed of the carrier 22 matches that of the output shaft 5b of the first steering shaft 5. Thereby, the transmission ratio R ($R=\theta 2/\theta 1$) is one, and thus, there is no change.

At this time, a relationship between the steering angle $\theta 1$ and the steering torque T does not necessarily change resulting from the operation of the transmission-ratio variable mechanism 8, and thus, it is not necessary to compensate for the steering counter force (equivalent to the steering torque $T_H$) of the steering member 2, and thus, the counter force compensating motor 23 is not driven.

On the other hand, when the judgment value A is negative, i.e., when the detected yaw rate Y exceeds the target yaw rate $Y^*$, and thus, the motor vehicle is in an over-steering state, or when the judgment value A is positive, i.e., when the detected yaw rate Y falls below the target yaw rate $Y^*$, and thus, the motor vehicle is in an under-steering state, the controller 24 drives the transmission-ratio changing motor 18 so that the rotation speed of the carrier 22 differs from that of the first steering shaft 5. Thereby, the transmission ratio R ($R=\theta 2/\theta 1$) is changed.

At that time, a relationship between the steering angle $\theta 1$ and the steering torque $T_H$ changes resulting from the operation of the transmission-ratio variable mechanism 8. This necessitates the compensation for the steering counter force (equivalent to the steering torque $T_H$) of the steering member 2. At this time, the controller 24 drives the counter force compensating motor 23 and imparts the first steering shaft 5 with the compensating torque so that the steering counter force is compensated. The counter force compensating motor 23 generates the compensating torque without changing the transmission ratio in the transmission-ratio variable mechanism 8.

This is preferable when the motor vehicle is in an over-steering state (or an under-steering state) as a result of traveling along a snow-covered road with a small road surface resistance, at the time of active steering such as when automatically changing the steered angle to a direction opposite to the steering direction of the steering member (automatically providing a counter) , for example, because the steering counter force applied to a driver can be complemented by the counter force compensating motor 23.

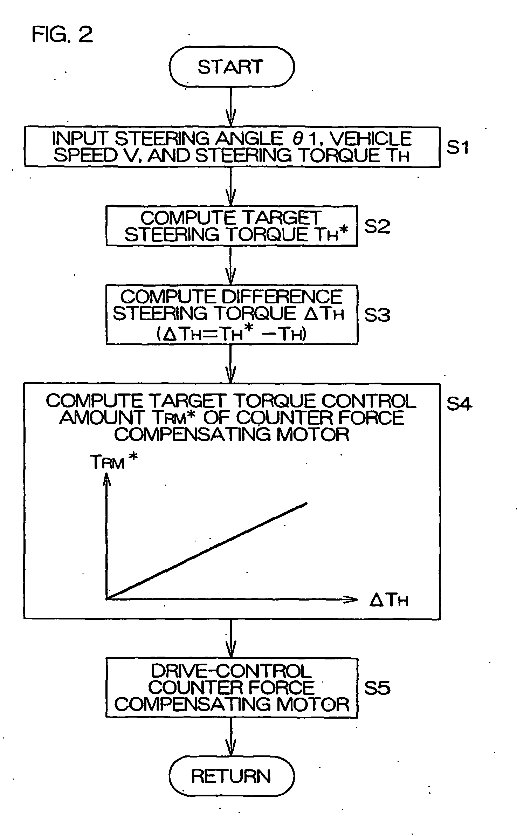

Subsequently, control when the counter force compensating motor 23 is caused to contribute to the steering assist will be described based on a flow chart in Fig. 2.

First, each detection value is read. That is, the steering angle $\theta 1$ detected by the steering angle sensor 26, the vehicle speed V detected by the speed sensor 29, and the steering torque $T_H$ detected by the torque sensor 27 are read (step S1). Subsequently, based on the read steering angle $\theta 1$ and vehicle speed V, by using a previously stored map, a target steering torque $T_H^*$ is evaluated (step S2).

Thereafter, a difference torque $\Delta T_H$ ($\Delta T_H=T_H^*-T_H$) between the target steering torque $T_{H^*}$ and the read steering torque $T_H$ is evaluated (step S3).

This is followed by computation of a target torque control amount $T_{RM}^*$ of the counter force compensating motor 23 so that the difference torque $\Delta T_H^*$ is brought close to zero (step S4). Specifically, a map in which a relationship between the difference torque $\Delta T_H$ and the target torque control amount $T_{RM}^*$ is defined is previously stored, and by referring to that map, the target torque control amount $T_{RM}^*$ is evaluated. For example, in some cases, the relationship is defined in the map so that the target torque control amount $T_{RM}^*$ is proportionally increased according to an increase in the difference torque $\Delta T_H$.

Based on the target torque control amount $T_{RM}^*$ thus evaluated, the counter force compensating motor 23 is drive-controlled (step S5). Specifically, a target driving electric current according to the target torque control amount ' $T_{RM}^*$ is set, and the driving circuit 25b performs PWM control, for example, so that the driving electric current of the counter force compensating motor 23 reaches the target driving electric current.

A torque $T_w$ added to the steered wheels 4L and 4R, including the output torque $T_{RM}$ of the counter force compensating motor 23, is expressed by the following equation (1). That is,

$$\mathbf{T_W \;=\; (T_H \;+\; T_{RM}) \;\times\; R \;+\; T_{PS} \;...(1),}$$

where

$T_H$: steering torque by the driver
$T_{RM}$: output torque of the counter force compensating motor 23
R: transmission ratio of the transmission-ratio variable mechanism 8
$T_{PS}$: output torque of the hydraulic pressure steering assist mechanism 80

Therefore, a large steering assist force required for a motor vehicle such as a full-sized vehicle and a luxury vehicle mounted with the active steering function can be obtained, and thus, the present invention can be suitably applied to these vehicles. Also, by the counter force compensating motor 23, the steering assist torque is obtained. Thus, the following advantages are provided:

That is, as compared to the conventional apparatus where the flow rate of the hydraulic pressure pump is increased, a rise of the torque is more immediate, and therefore, a problem of the insufficient steering assist force can be reliably solved. Further, the prevent invention can be applied to a wider torque band. Also, irrespective of the presence of the flow-rate control valve, the present invention can be applied to various types of hydraulic pressure steering apparatuses, and thus, a high degree of versatility is provided. Moreover, a problem of the insufficient steering assist force encountered at the time of stationary steering (which is difficult to solve in the conventional apparatus where the flow rate of the hydraulic pressure pump is increased) can be solved by the present invention.

In addition, the steering assist control is requested when the steering assist force is insufficient, and at that time, the sufficient steering counter force has been given to the driver via the steering member 2, and thus, the counter force compensating control needs not to be carried out. On the other hand, the counter force compensating control is that which is requested at the time of active steering such as if the motor vehicle is in an over-steering state, for example, as a result of traveling along a snow-covered road with a small road surface resistance, the steered angle is automatically changed to a direction opposite to the steering direction of the steering member 2 (counter is automatically provided). The load at the time of such an active steering is small, and thus, the steering assist control will not be required. That is, there is no possibility that the steering assist control and the counter force compensating control are simultaneously carried out, and therefore, there is no adverse effect resulting from the interference between the both controls.

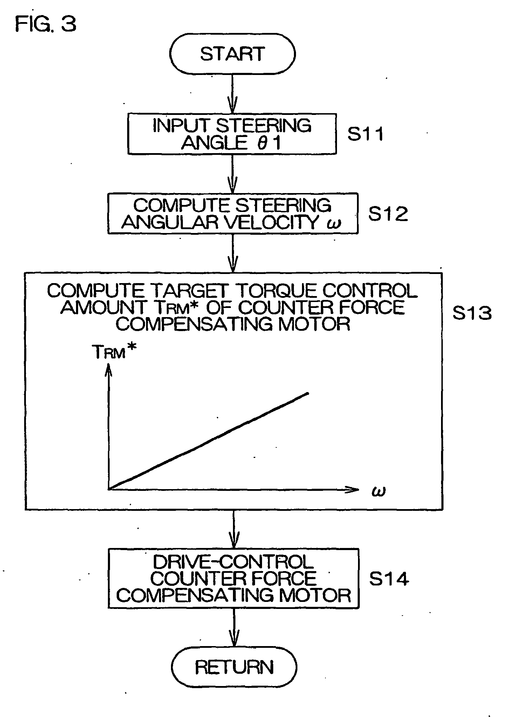

Subsequently, Fig. 3 is a flow chart when the counter force compensating motor 23 is caused to contribute to the steering assist in another embodiment of the present invention.

The steering angle θ1 detected by the steering angle sensor 26 is read (step S11), and a steering angular velocity ω that is a time differential of the read steering angle θ1 is computed (step S12).

This is followed by evaluation of the target torque control amount $T_{RM}^*$ of the counter force compensating motor 23 by using the previously stored map, based on the computed steering angular velocity ω (step S13).

Specifically, a map in which a relationship between the steering angular velocity ω and the target torque control amount $T_{RM}^*$ is defined is previously stored, and by referring to that map, the target torque control amount $T_{RM}^*$ is evaluated. For example, in some cases, the relationship is defined in the map so that the target torque control amount $T_{RM}^*$ is proportionally increased according to an increase in the steering angular velocity ω.

Based on the target torque control amount $T_{RM}^*$ thus evaluated, the counter force compensating motor 23 is drive-controlled (step S14). Specifically, a target driving electric current according to the target torque control amount $T_{RM}^*$ is set, and the driving circuit 25b performs PWM control, for example, so that the driving electric current of the counter force compensating motor 23 reaches the target driving electric current.

According to the present embodiment, the same effect and operation can be provided as those in the embodiment in Fig. 2. That is, a large steering assist force required for motor vehicles such as a full-sized vehicle and a luxury vehicle mounted thereon with the active steering function can be obtained. Further, the steering assist torque is obtained by the counter force compensating motor 23, and thus, as compared to the conventional apparatus in which the flow rate of the hydraulic pressure pump is increased, the rise of the torque is more immediate and a problem of the insufficient steering assist force can be reliably solved. Further, the present invention can be applied to a wider torque band. Also, irrespective of the presence of the flow-rate control valve, the present invention can be applied to various types of hydraulic power steering apparatuses, and thus, a high degree of versatility is provided. Moreover, a problem of the insufficient steering assist force encountered at the time of stationary steering (which is difficult to solve in the conventional apparatus where the flow rate of the hydraulic pressure pump is increased) can be solved by the present invention.

In addition, when the controller 24 is configured to control the transmission-ratio changing motor 18 based on the detected steering angle θ1 and steering angular velocity ω, the target torque control amount $T_{RM}^*$ of the counter force compensating motor 23 may be controlled stepwise so that when the steering angular velocity ω is equal to or more than a threshold value, the target torque control amount $T_{RM}^*$ of the counter force compensating motor 23 becomes equal to or more than a predetermined amount and when the steering angular velocity is less than the threshold value, the target torque control amount $T_{RM}^*$ falls below the predetermined amount.

In this case, the following advantages are provided: That is, in the control of the transmission-ratio variable mechanism 8, there is a case where a threshold value is provided to the steering angular velocity ω to avoid erroneous operations resulting from an error, noise, etc. Thus, for example, when the steering member 2 is operated by the steering angular velocity ω equal to or more than the threshold value, there occurs a situation where the transmission-ratio variable mechanism 8 is controlled only by the steering angular velocity ω. In this situation, in accordance with an increase in the steering angle θ1, the supply power to the transmission-ratio changing motor 18 becomes larger. Then, only when the resultant force between the output of the transmission-ratio changing motor 18 and the force generated by the hydraulic steering assist mechanism 80 exceeds the force required for moving the steered wheels 4L and 4R, the steered wheels 4L and 4R are steered.

On the other hand, as described above, when the steering angular velocity ω becomes equal to or more than the threshold value in accordance with an increase in the detected steering angle θ1, the counter force compensating motor 23 can generate a torque of which the power is equal to or more than a predetermined value with good responsiveness and can increase the steering assist force sensitively. As a result, the timing at which the steered wheels 4L and 4R start moving can be expedited.

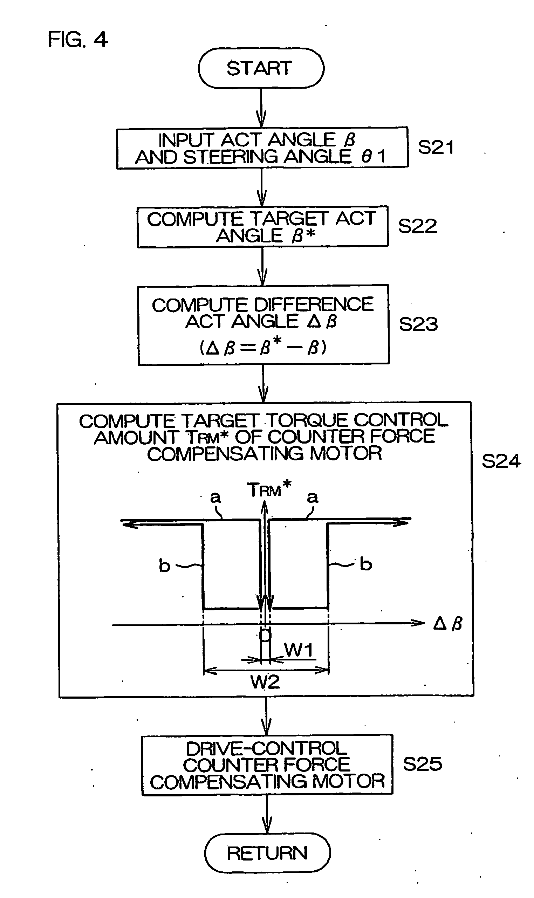

Subsequently, Fig. 4 is a flow chart when the counter force compensating motor 23 is caused to contribute to the steering assist in still another embodiment of the present invention.

In the present embodiment, an ACT angle ß (detected by the rotation angle sensor 78) of the transmission-ratio changing motor 18 and the steering angle θ1 detected by the steering angle sensor 26 are read (step S21). Based on the read steering angle θ1, a target ACT angle ß* (a control target value of the rotation angle of the transmission-ratio changing motor 18) is computed (step S22). Specifically, the read steering angle θ1 and a rotation transmission ratio of the transmission-ratio variable mechanism 8 are multiplied so as to compute the target ACT angle ß*. In addition, the rotation transmission ratio is computed from information such as a vehicle speed value and a steering angle.

Subsequently, at step S23, a difference ACT angle Δß (a difference between the detected ACT angle β and the target ACT angle ß*) is computed (Δß=ß*-ß).

Next, at step S24, based on the difference ACT angle Δß, a previously stored map is used to evaluate a target torque control amount $T_{RM}^*$ of the counter force compensating motor 23. Based on the target torque control amount $T_{RM}^*$, the counter force compensating motor 23 is drive-controlled. In this way, a standby mode (a state where the steering assist is insufficient) and a steering assist state (a state where the steering assist is carried out) is switched. Specifically, a target driving electric current according to the target torque control amount $T_{RM}^*$ is set, and the driving circuit 25b performs PWM control, for example, so that the driving electric current of the counter force compensating motor 23 reaches the target driving electric current.

At step S24, the transition from the steering assist state to the standby mode is carried out when the absolute value of the difference ACT angle Δß that is, at first, out of a range of W1 gradually diminishes, and finally, enters the range of W1, as indicated by a solid line a. Further, the transition from the standby mode to the steering assist state is carried out when the absolute value of the difference ACT angle Δß that is, at first, in a range of W2 gradually becomes larger, and finally, stays out of the range of W2, as indicated by a solid line b. In addition , in this example, in order to realize control hysteresis, the range of W2 is defined so as to encompass the range of W1.

Thus, when the difference ACT angle Δß is equal to or more than the threshold value, control is performed so that the torque control amount $T_{RM}$ of the counter force compensating motor 23 becomes equal to or more than a predetermined amount. Thus, the following advantages are provided: That is, even when the steering member 2 is slowly operated in a range in which the steering angular velocity ω falls below the threshold value, the steered wheels 4L and 4R can be promptly steered. The reason for this is that in this case, in accordance with an increase in the steering angle θ1, the difference ACT angle Δß becomes larger, and thus, when the difference ACT angle Δß becomes equal to or larger than the threshold value, the steering assist torque of which the power is equal to or more than the predetermined amount is obtained by the counter force compensating motor 23.

Therefore, for the operation of the steering member 2, the timing at which the steered wheels 4L and 4R start moving is fast, and thus, the steering feeling is improved.

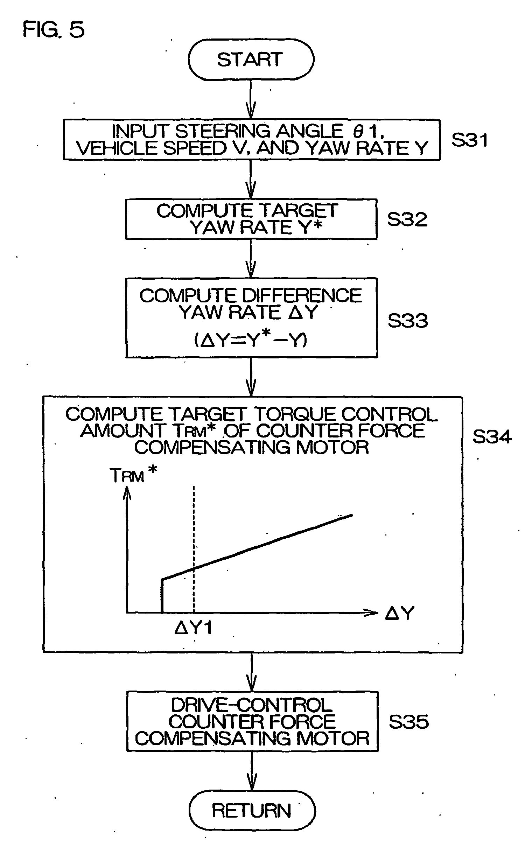

Subsequently, Fig. 5 is a flow chart when the counter force compensating motor 23 is caused to contribute to the steering assist in yet still another embodiment of the present invention.

In this embodiment, first, the steering angle θ1 detected by the steering angle sensor 26, the vehicle speed V detected by the speed sensor 29, and the yaw rate Y detected by the yaw rate sensor 30 are read (step S31).

Based on the read steering angle θ1 and vehicle speed V, the target yaw rate Y* is computed (step S32). Subsequently, at step S33, a difference yaw rate $\Delta Y$ (a difference between the detected yaw rate Y and the target yaw rate Y*) is computed ($\Delta Y = Y^* - Y$).

Thereafter, at step S34, based on the difference yaw rate $\Delta Y$, a previously stored map is used to evaluate a target torque control amount $T_{RM}^*$ of the counter force compensating motor 23.

Specifically, a map in which a relationship between the difference yaw rate $\Delta Y$ and the target torque control amount $T_{RM}^*$ is defined is previously stored, and by referring to this map, the target torque control amount $T_{RM}^*$ is evaluated. Based on the target torque control amount $T_{RM}^*$ thus evaluated, the counter force compensating motor 23 is drive-controlled (step S35). Specifically, a target driving electric current according to the target torque control amount $T_{RM}^*$ is set, and the driving circuit 25b performs PWM control, for example, so that the driving electric current of the counter force compensating motor 23 reaches the target driving electric current.

At step S34, in the map, a threshold value $\Delta Y1$ is set to a difference yaw rate $\Delta Y$. The threshold value $\Delta Y1$ is equivalent to a threshold value with which the transmission-ratio variable mechanism 8 starts the yaw rate control for decreasing the yaw rate. Further, it is defined in the map so that a predetermined amount of the target torque control amount $T_{RM}^*$ is generated from a difference yaw rate region smaller than the threshold value $\Delta Y1$, and the target torque control amount $T_{RM}^*$ is proportionally increased according to an increase in the difference yaw rate $\Delta Y$.

Therefore, prior to the start of the yaw rate control, the transmission-ratio variable mechanism 8 can generate the steering assist torque of which the power is equal to or more than a predetermined amount in the counter force compensating motor 23. Thus, at the time of the yaw rate control, the steering assist force will not become insufficient , and thus, the steering feeling excels.

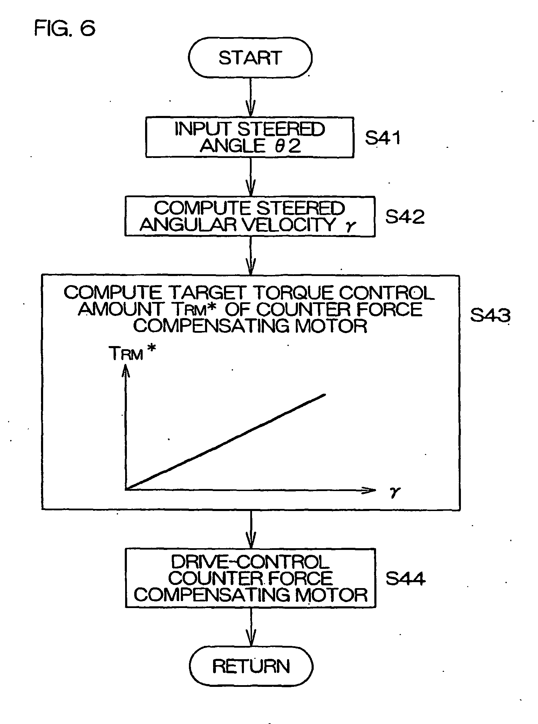

Subsequently, Fig. 6 is a flow chart when the counter force compensating motor 23 is caused to contribute to the steering assist in another embodiment of the present invention.

A steered angle θ2 detected by the steered angle sensor 28 is read (step S41). A steered angular velocity γ (equivalent to a pinion shaft angular velocity) that is a time differential of the read steered angle θ2 is computed (step S42). Next, based on the computed steered angular velocity γ, the previously stored map is used to evaluate the target torque control amount $T_{RM}^*$ of the counter force compensating motor 23 (step S43).

Specifically, a map in which a relationship between the steered angular velocity γ and the target torque control amount $T_{RM}^*$ is defined is previously stored, and by referring to this map, the target torque control amount $T_{RM}^*$ is evaluated. For example, in some cases, the relationship is defined in the map so that the target torque control amount $T_{RM}^*$ is proportionally increased according to an increase in the steered angular velocity γ.

Based on the target torque control amount $T_{RM}^*$ thus evaluated, the counter force compensating motor 23 is drive-controlled (step S44). Specifically, a target driving electric current according to the target torque control amount $T_{RM}^*$ is set, and the driving circuit 25b performs PWM control, for example, so that the driving electric current of the counter force compensating motor 23 reaches the target driving electric current.

In the present embodiment, the same effect and operation as those in the embodiment in Fig. 3 can be provided, and a large steering assist force required for a motor vehicle such as a full-sized vehicle and a luxury vehicle mounted thereon with the active steering function can be obtained. Further, the rise of the torque is more immediate and a problem of the insufficient steering assist force can be reliably solved, and thus, the steering feeling can be improved. Also, the present invention can be applied not only to a hydraulic power steering type but also to any other type, and thus, a high degree of versatility can be provided.

The steered angular velocity γ may also be evaluated by multiplying the transmission ratio R evaluated from the ACT angle ß of the transmission-ratio changing motor 18 detected by the rotation angle sensor 78 by the steering angular velocity ω that is a time differential of the steering angle θ1 detected by the steering angle sensor 26.

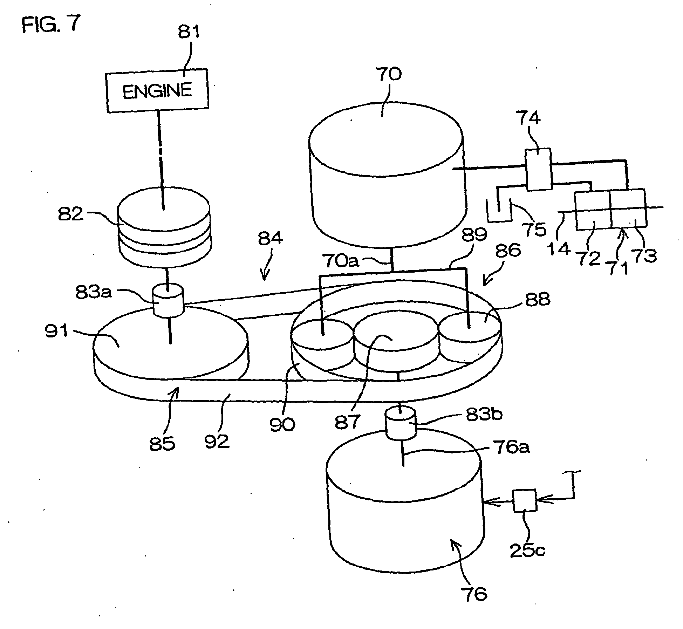

According to the present invention a hybrid drive is adopted in which as a power source of the hydraulic pressure pump 70, the engine 81 and electric motor 76 are used, as shown in Fig. 7.

Specifically, the power of the engine 81 drives the hydraulic pressure pump 70 via a power transmission clutch 82 that can transmit the power in an on-and-off manner, one clutch 83a, and a transmission mechanism 84. The one clutch 83a permits only the power transmission from the engine 81 to the transmission mechanism 84 side.

The transmission mechanism 84 includes a belt transmission mechanism 85 and a planetary transmission mechanism

EP 2 070 804 B1

86. The planetary transmission mechanism 86 includes, for example, a sun gear 87 (as a first element) coupled, for example, integrally rotatably via the one clutch 83b with a rotation shaft 76a of the electric motor 76 so that power can be transmitted; a carrier 89 (as a second element) that supports a planetary gear 88 meshed with the sun gear 87 in a manner to permit revolution around the sun gear 87; and a ring gear 90 having internal teeth meshed with the planetary gear 88.

The carrier 89 (as a second element) is coupled, for example, integrally rotatably to the pump shaft 70a of the hydraulic pressure pump 70 so that the power can be transmitted. The ring gear 90 configures a third element for differentially rotatably coupling the sun gear 87 as a first element and the carrier 89 as a second element. The ring gear 90 serves also as a driven pulley of the belt transmission mechanism 85. That is, the belt transmission mechanism 85 is provided with: a drive pulley 91 integrally rotatably coupled to a driven side of the one clutch 83a; and a driven pulley configured by the ring gear 90 coupled via an endless belt 92 to the drive pulley 91. That is, the ring gear 90 as a third element is coupled via the clutch 83a to the engine 81 of the motor vehicle so that the power can be transmitted.

With such a configuration, when traveling at high speed with a light load or when responsiveness is required at the time of starting, etc., the power transmission clutch 82 is cut to block the power transmission from the engine 81 while the rotation of the drive pulley 91 or the ring gear 90 is restrained by a restraining member (for example, a braking member).

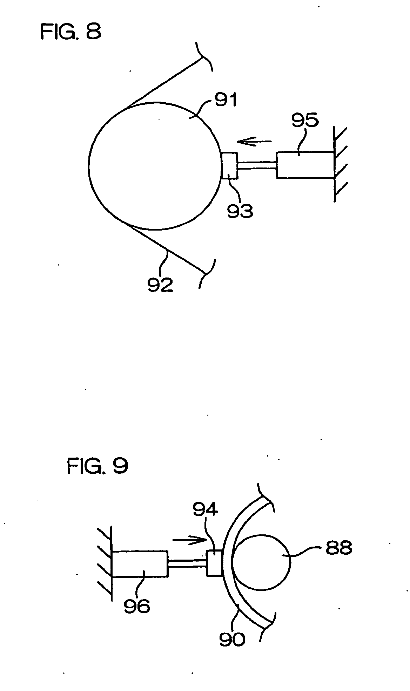

As the restraining member, a friction member 93 that can press the drive pulley 91 by compression as shown in Fig. 8, for example, and a friction member 94 that can press the ring gear 90 by compression as shown in Fig. 9, for example, can be used. Each of the friction members 93 and 94 is driven by the corresponding drive member 95 or 96. As the drive members 95 and 96, a magnetic plunger or a hydraulic pressure cylinder may be used.

When the rotation of the drive pulley 91 or the ring gear 90 is restrained, the hydraulic pressure pump 70 can be driven only by the electric motor 76. As shown in Fig. 9, when the friction member 94 is used as the restraining member, the rotation of the ring gear 90 is to be directly restrained. As shown in Fig. 8, when the rotation of the drive pulley 91 is restrained, the rotation of the ring gear 90 is to be indirectly restrained via the belt 92 by the friction member 93 as the restraining member.

The planetary transmission mechanism 86 in which the ring gear 90 is stopped by the restraint functions as a reducer, and thus, the rotation speed of the hydraulic pressure pump 70 can be decreased for the rotation speed of the electric motor 76, thereby contributing to inhibiting noise.

On the other hand, at the time of a high load such as at the time of stationary steering, the power transmission clutch 82 is connected while the restraint of the drive pulley 91 by the restraining member is canceled and the rotation of the electric motor 76 is stopped. Thereby, the hydraulic pressure plump 70 is driven only by the engine 81.

In this way, the drive is switched to the engine drive at the time of the high load, and thus, the electric motor 76 that is small with a low load may be used. By the control of the electric motor 76, the rotation speed of the hydraulic pressure pump 70 can be easily adjusted, and by extension, the adjustment of the steering assist force is easy.

Thus, the present invention is described in detail by specific modes. Those skilled in the art who understand the above-described contents may easily conceive the modifications, alternations, and equivalents.

**Claims**

**1.** A motor vehicle steering apparatus (1), comprising:

a transmission-ratio variable mechanism (8) for changing a transmission ratio of a rotation between a first steering shaft (5) coupled to a steering member (2) and a second steering shaft (6) coupled to a steering mechanism (12);
a transmission-ratio changing motor (18) for changing the transmission ratio of the transmission-ratio variable mechanism (8);
a counter force compensating motor (23) for compensating a steering counter force of the steering member (2) caused by an operation of the transmission-ratio variable mechanism (8);
a steering assist mechanism (80) for generating a steering assist force by a hydraulic pressure: and
a controller (24) for controlling the transmission-ratio changing motor (18) and the counter force compensating motor (23), wherein
the controller is adapted to cause the generation of a steering assist torque In the counter force compensating motor (23),
**characterized in that** the steering assist mechanism is a hydraulic steering assist mechanism (80), which comprises:

- a power cylinder (71) for generating the steering assist force;

- a hydraulic pressure pump (70) for supplying the power cylinder (71) with pressure oil;
- an electric motor (76) for driving the hydraulic pressure pump (70); and
- a planetary transmission mechanism (84) for coupling a pump shaft of the hydraulic pressure pump (70) and a rotation shaft of the electric motor (76); and
- a restraining member, wherein

the planetary transmission mechanism includes:

- a first element (87) coupled via a clutch (83b) to the rotation shaft of the electric motor (76) so that power can be transmitted;
- a second element (88) coupled to the pump shaft (70a) of the hydraulic pressure pump (70) so that power can be transmitted;
- a third element (90) which is differentially rotatably coupled to the first and second elements (87, 88) and of which rotation can be restrained by a restraining member (93; 94),
- the third element (90) is coupled via a clutch (83a) to an engine (81) of the motor vehicle so that power can be transmitted, and
- the restraining member (93; 94) is able to restrain the rotation of the third element (90) directly or indirectly

2. The motor vehicle steering apparatus according to claim 1, comprising:

vehicle-speed detecting means (29);
steering-angle detecting means (26) for detecting a steering angle ($\Theta$1) of the steering member (2); and
steering-torque detecting means (27) for detecting a steering torque ($T_H$) of the steering member (2), wherein the controller (24) computes a target steering torque based on a vehicle speed (V) detected by the vehicle-speed detecting means (29) and the steering angle ($\Theta$1) detected by the steering-angle detecting means (26), and controls the steering assist torque of the counter force compensating motor (23) so that a difference between the computed target steering torque and the steering torque ($T_H$) detected by the steering-torque detecting means (27) is canceled.

3. The motor vehicle steering apparatus according to claim 1, comprising steering-angle detecting means (26) for detecting a steering angle ($\Theta$1) of the steering member (2), wherein the controller (24) controls the steering assist torque of the counter force compensating motor (23) based on a steering angular velocity that is a time differential of the steering angle ($\Theta$1) detected by the steering-angle detecting means (26).

4. The motor vehicle steering apparatus according to claim 1, comprising:

steering-angle detecting means (26) for detecting a steering angle ($\Theta$1) of the steering member (2); and
rotation-angle detecting means for detecting a rotation angle of the transmission-ratio changing motor (18), wherein the controller (24) computes a target rotation angle that is a control target value of a rotation angle of a motor in transmission-ratio changing motor (18), based on the steering angle ($\Theta$1) the steering-angle detecting means (26), and controls the steering assist torque of counter force compensating motor (23), based on a difference between the computed target rotation angle and the rotation angle detected by the rotation-angle detecting means (78).

5. The motor vehicle steering apparatus according to claim 1, comprising:

vehicle-speed detecting means (29);
steering-angle detecting means (26) for detecting a steering angle ($\Theta$1) of the steering member (2); and
yaw rate detecting means (30) for detecting a yaw rate (Y) generated in the motor vehicle (24), wherein the controller (24) computes a target yaw rate based on the vehicle speed (V) detected by the vehicle-speed detecting means (29) and the steering angle ($\Theta$1) detected by the steering-angle detecting means (26), and controls the steering assist torque of the counter force compensating motor (23) based on a difference between the computed target yaw rate and the yaw rate (Y) detected by the yaw rate detecting means (30).

6. The motor vehicle steering apparatus according to claim 1, comprising steered-angle detecting means (28) for defecting a steered angle ($\Theta$2) of the steered member, wherein

the controller (24) controls the steering assist torque of the counter force compensating motor (23) based on a steered angular velocity that is a time differential of the steered angle ($\Theta 2$) detected by the steered-angle detecting means (28).

**Patentansprüche**

1. Lenkvorrichtung (1) für ein Kraftfahrzeug, mit:

  einem Mechanismus (8) mit variablem Übersetzungsverhältnis zum Ändern eines Rotations-Übersetzungsverhältnisses zwischen einer ersten Lenkwelle (5), die mit einem Lenkglied (2) gekoppelt ist, und einer zweiten Lenkwelle (6), die mit einem Lenkmechanismus (12) gekoppelt ist;
  einem Übersetzungsverhältnisänderungsmotor (18) zum Ändern des Übersetzungsverhältnisses des Mechanismus (8) mit variablem Übersetzungsverhältnis;
  einem Gegenkraftkompensationsmotor (23) zum Kompensieren einer Lenkgegenkraft des Lenkgliedes (2), die durch eine Betätigung des Mechanismus (8) mit variablem Übersetzungsverhältnis hervorgerufen wird;
  einem Lenkhilfsmechanismus (80) zum Erzeugen einer Lenkhilfskraft mittels eines hydraulischen Druckes; und
  einer Steuereinrichtung (24) zum Steuern des Übersetzungsverhältnisänderungsmotors (18) und des Gegenkraftkompensationsmotors (23), wobei die Steuereinrichtung dazu ausgelegt ist, die Erzeugung eines Lenkhilfsdrehmomentes in dem Gegenkraftkompensationsmotor (23) hervorzurufen,
  **dadurch gekennzeichnet, dass** der Lenkhilfsmechanismus ein hydraulischer Lenkhiffsmechanismus (80) ist, der aufweist:

  - einen Leistungszylinder (71) zum Erzeugen der Lenkhilfskraft;
  - eine Hydraulikdruckpumpe (70) zum Versorgen des Leistungszylinders (71) mit Drucköl;
  - einen elektrischen Motor (76) zum Antreiben der Hydraulikdruckpumpe (70); und
  - einen Planetengetriebemechanismus (84) zum Koppeln einer Pumpenwelle der Hydraulikdruckpumpe (70) und einer Drehwelle des elektrischen Motors (76); und
  - ein Begrenzungselement, wobei

  der Planetengetriebemechanismus aufweist:

  - ein erstes Element (87), das über eine Kupplung (83b) mit der Drehwelle des elektrischen Motors (76) gekoppelt ist, so dass Leistung übertragen werden kann;
  - ein zweites Element (88), das mit der Pumpenwelle (70a) der Hydraulikdruckpumpe (70) gekoppelt ist, so dass Leistung übertragen werden kann;
  - ein drittes Element (90), das differenziell drehbar mit dem ersten und dem zweiten Element (87, 88) gekoppelt ist und dessen Rotation durch das Begrenzungselement (93; 94) begrenzt werden kann,
  - wobei das dritte Element (90) über eine Kupplung (83a) mit einem Motor (81) des Kraftfahrzeuges gekoppelt ist, so dass Leistung übertragen werden kann, und
  - wobei das Begrenzungselement (93; 94) dazu in der Lage ist, die Rotation des dritten Elementes (90) direkt oder indirekt zu begrenzen.

2. Lenkvorrichtung für ein Kraftfahrzeug nach Anspruch 1, mit:

  Fahrzeuggeschwindigkeitserfassungsmitteln (29);
  Lenkwinkelerfassungsmitteln (26) zum Erfassen eines Lenkwinkels ($\Theta 1$) des Lenkgliedes (2); und
  Lenkdrehmomenterfassungsmitteln (27) zum Erfassen eines Lenkdrehmomentes ($T_H$) des Lenkgliedes (2), wobei
  die Steuereinrichtung (24) ein Soll-Lenkdrehmoment basierend auf einer Fahrzeuggeschwindigkeit (V), wie sie von den Fahrzeuggeschwindigkeitserfassungsmitteln (29) erfasst ist, und dem Lenkwinkel ($\Theta 1$), wie er von den Lenkwinkelerfassungsmitteln (26) erfasst ist, berechnet und das Lenkhilfsdrehmoment des Gegenkraftkompensationsmotors (23) derart steuert, dass eine Differenz zwischen dem berechneten Soll-Lenkdrehmoment und dem von den Lenkdrehmomenterfassungsmitteln (27) erfassten Lenkdrehmoment ($T_H$) aufgehoben wird.

3. Lenkvorrichtung für ein Kraftfahrzeug nach Anspruch 1, mit Lenkwinkelerfassungsmitteln (26) zum Erfassen eines Lenkwinkels ($\Theta 1$) des Lenkgliedes (2), wobei die Steuereinrichtung (24) das Lenkhilfsdrehmoment des Gegenkraftkompensationsmotors (23) auf der Grundlage einer Lenkwinkelgeschwindigkeit steuert, bei der es sich um ein zeitliches Differenzial des Lenkwinkels (Θ1) handelt, der von den Lenkwinkelerfassungsmitteln (26) erfasst wird.

4. Lenkvorrichtung für ein Kraftfahrzeug nach Anspruch 1, mit:

Lenkwinkelerfassungsmitteln (26) zum Erfassen eines Lenkwinkels (Θ1) des Lenkgliedes (2); und Drehwinkelerfassungsmitteln (78) zum Erfassen eines Drehwinkels des Übersetzungsverhältnisänderungsmotors (18), wobei die Steuereinrichtung (24) einen Solldrehwinkel berechnet, der ein Regelsollwert eines Drehwinkels eines Motors in dem Übersetzungsverhältnisänderungsmotor (18) ist, und zwar auf der Grundlage des von den Lenkwinkelerfassungsmitteln (26) erfassten Lenkwinkels (Θ1), und wobei die Steuereinrichtung (24) das Lenkhilfsdrehmoment des Gegenkraftkompensationsmotors (23) auf der Grundlage einer Differenz zwischen dem berechneten Solldrehwinkel und dem Drehwinkel steuert, der von den Drehwinkelerfassungsmitteln (78) erfasst ist.

5. Lenkvorrichtung für ein Kraftfahrzeug nach Anspruch 1, mit:

Fahrzeuggeschwindigkeitserfassungsmitteln (29);
Lenkwinkelerfassungsmitteln (26) zum Erfassen eines Lenkwinkels (Θ1) des Lenkgliedes (2); und Gierratenerfassungsmitteln (30) zum Erfassen einer Gierrate (Y), die in dem Kraftfahrzeug (24) erzeugt wird, wobei die Steuervorrichtung (24) eine Sollgierrate auf der Grundlage der Fahrzeuggeschwindigkeit (V), die von den Fahrzeuggeschwindigkeitserfassungsmitteln (29) erfasst ist, und des Lenkwinkels (Θ1) berechnet, der von den Lenkwinkelerfassungsmitteln (26) erfasst ist, und das Lenkhilfsdrehmoment des Gegenkraftkompensationsmotors (23) auf der Grundlage einer Differenz zwischen der berechneten Sollgierrate und der Gierrate (Y) steuert, die von den Gierratenerfassungsmitteln (30) erfasst ist.

6. Lenkvorrichtung für ein Kraftfahrzeug nach Anspruch 1, mit Einlenkwinkelerfassungsmitteln (28) zum Erfassen eines Einlenkwinkels (02) des gelenkten Elementes, wobei die Steuervorrichtung (24) das Lenkhilfsdrehmoment des Gegenkraftkompensationsmotors (23) auf der Grundlage einer Einlenkwinkelgeschwindigkeit steuert, bei der es sich um ein zeitliches Differenzial des Einlenkwinkels (Θ2) handelt, der von den Einlenkwinkelerfassungsmitteln (28) erfasst ist.

## Revendications

1. Dispositifde direction de véhicule automobile (1), comprenant:

un mécanisme de transmission à rapport variable (8) pour changer un rapport de transmission d'un mouvement de rotation entre un premier arbre de direction (5) couplé à un élément de direction (2) et un second arbre de direction (6) couplé à un mécanisme de direction (12) ;
un moteur de changement de rapport de transmission (18) pour changer le rapport de transmission du mécanisme de transmission à rapport variable (8) ;
un moteur de compensation de contre force (23) pour compenser une contre force de l'élément de direction (2) causée par le fonctionnement du mécanisme de transmission à rapport variable (8) ;
un mécanisme d'assistance de direction (80) pour produire une force d'assistance de direction transmise par une pression hydraulique ; et
une unité de commande (24) pour commander le moteur de changement de rapport de transmission (18) et le moteur de compensation de contre force (23), dans lequel
l'unité de commande est adaptée à commander la production d'une force d'assistance de direction par le moteur de compensation de contre force (23),
**caractérisé en ce que** le mécanisme d'assistance de direction est un mécanisme d'assistance de direction hydraulique (80), qui comprend:

un vérin de commande (71) pour produire la force d'assistance de direction ;
une pompe hydraulique de pressurisation (70) pour alimenter le vérin de commande (71) en huile pressurisée ;
un moteur électrique (76) pour entraîner la pompe hydraulique de pressurisation (70) ; et
un mécanisme de transmission à engrenages planétaires (84) pour coupler un arbre d'entraînement de pompe de la pompe hydraulique de pressurisation (70) et un arbre rotatif du moteur électrique (76) ; et
un élément de blocage, dans lequel

le mécanisme de transmission à engrenages planétaires comprend :

un premier élément (87) couplé par l'intermédiaire d'un embrayage (83b) à l'arbre rotatif du moteur électrique (76) pour permettre la transmission de la puissance ;
un second élément (88) couplé à l'arbre de pompe (70a) de la pompe hydraulique de pressurisation (70) pour permettre la transmission de la puissance;
un troisième élément (90) qui est couplé au premier et au second éléments (87, 88) de manière à effectuer une rotation différentielle et dont ladite rotation peut être bloquée par un élément de blocage (93 ; 94),
le troisième élément (90) étant couplé par l'intermédiaire d'un embrayage (83a) à un moteur (81) du véhicule automobile de manière à permettre la transmission de la puissance, et
l'élément de blocage (93 ; 94) étant apte à bloquer directement ou indirectement la rotation du troisième élément (90).

2. Dispositif de direction de véhicule automobile selon la revendication 1 comprenant :

un moyen de détection de vitesse du véhicule (29) ;
un moyen de détection d'angle de braquage (26) pour détecter un angle de braquage ($\Theta$1) de l'élément de direction (2) ; et
un moyen de détection de couple de braquage (27) pour détecter un couple de braquage ($T_H$) de l'élément de direction (2), dans lequel
l'unité de commande (24) calcule un couple de braquage cible établi sur la base d'une vitesse du véhicule (V) détectée par le moyen de détection de vitesse du véhicule (29) et de l'angle de braquage ($\Theta$1) détecté par le moyen de détection d'angle de braquage (26) et commande le couple d'assistance de direction du moteur de compensation de contre force (23) de manière à ce qu'une différence entre le couple de braquage cible calculé et le couple de braquage ($T_H$) détecté par le moyen de détection de couple de braquage (27) soit annulée.

3. Dispositif de direction de véhicule automobile selon la revendication 1 comprenant un moyen de détection d'angle de braquage (26) pour détecter un angle de braquage ($\Theta$1) de l'élément de direction (2), dans lequel
l'unité de commande (24) commande le couple d'assistance de direction du moteur de compensation de contre force (23) sur la base d'une vitesse angulaire de la direction qui est un différentiel de temps de l'angle de braquage ($\Theta$1) détecté par le moyen de détection d'angle de braquage (26).

4. Dispositif de direction de véhicule automobile selon la revendication 1 comprenant :

un moyen de détection d'angle de braquage (26) pour détecter un angle de braquage ($\Theta$1) de l'élément de direction (2) ; et
un moyen de détection d'angle de rotation (78) pour détecter un angle de rotation du moteur de changement de rapport de transmission (18), dans lequel
l'unité de commande (24) calcule un angle de rotation cible qui est une valeur de commande cible d'un angle de rotation du moteur de changement de rapport de transmission (18), établie sur la base de l'angle de braquage ($\Theta$1) détecté par le moyen de détection d'angle de braquage (26) et commande le couple d'assistance de direction du moteur de compensation de contre force (23), sur la base d'une différence entre l'angle de rotation cible calculé et l'angle de rotation détecté par le moyen de détection d'angle de rotation (78).

5. Dispositif de direction de véhicule automobile selon la revendication 1 comprenant :

un moyen de détection de vitesse du véhicule (29) ;
un moyen de détection d'angle de braquage (26) pour détecter un angle de braquage ($\Theta$1) de l'élément de direction (2) ; et
un moyen de détection de vitesse de lacet (30) pour détecter une vitesse de lacet (Y) produite dans le véhicule automobile (24), dans lequel
l'unité de commande (24) calcule une vitesse de lacet cible établie sur la base d'une vitesse du véhicule (V) détectée par le moyen de détection de vitesse du véhicule (29) et de l'angle de braquage ($\Theta$1) détecté par le moyen de détection d'angle de braquage (26) et commande le couple d'assistance de direction du moteur de compensation de contre force (23) sur la base de la différence entre la vitesse de lacet cible qui a été calculée et la vitesse de lacet (Y) détectée par le moyen de détection de vitesse de lacet (30).

6. Dispositif de direction de véhicule automobile selon la revendication 1, comprenant un moyen de détection d'angle de direction (28) pour détecter un angle de direction (Θ2) de l'élément de direction, dans lequel l'unité de commande (24) commande le couple d'assistance de direction du moteur de compensation de contre force (23) sur la base d'une vitesse angulaire de direction qui est un différentiel de temps de l'angle de direction (Θ2) détecté par le moyen de détection d'angle de direction (28).

FIG. 1

FIG. 2

```
        ( START )
            │
            ▼
┌─────────────────────────────┐
│ INPUT STEERING ANGLE θ1, VEHICLE │  S1
│ SPEED V, AND STEERING TORQUE TH  │
└─────────────────────────────┘
            │
            ▼
    ┌──────────────────┐
    │  COMPUTE TARGET   │  S2
    │ STEERING TORQUE TH* │
    └──────────────────┘
            │
            ▼
    ┌──────────────────┐
    │ COMPUTE DIFFERENCE │  S3
    │ STEERING TORQUE ΔTH │
    │  (ΔTH=TH* −TH)     │
    └──────────────────┘
            │
            ▼
┌─────────────────────────────┐
│ COMPUTE TARGET TORQUE CONTROL │  S4
│  AMOUNT TRM* OF COUNTER FORCE │
│      COMPENSATING MOTOR       │
│                               │
│   TRM*                        │
│    ▲                          │
│    │          ╱               │
│    │       ╱                  │
│    │    ╱                     │
│    │ ╱                        │
│    └──────────────▶ ΔTH       │
└─────────────────────────────┘
            │
            ▼
    ┌──────────────────┐
    │  DRIVE-CONTROL    │  S5
    │  COUNTER FORCE    │
    │ COMPENSATING MOTOR │
    └──────────────────┘
            │
            ▼
        ( RETURN )
```

FIG. 3

```
        ┌─────────────┐
        │    START    │
        └─────────────┘
               │
               ▼
    ┌──────────────────────┐
    │   INPUT STEERING     │  S11
    │    ANGLE θ1          │
    └──────────────────────┘
               │
               ▼
    ┌──────────────────────┐
    │  COMPUTE STEERING    │  S12
    │  ANGULAR VELOCITY ω  │
    └──────────────────────┘
               │
               ▼
```

COMPUTE TARGET TORQUE CONTROL
AMOUNT TRM* OF COUNTER FORCE    S13
COMPENSATING MOTOR

TRM*

ω

```
               │
               ▼
    ┌──────────────────────┐
    │    DRIVE-CONTROL     │  S14
    │    COUNTER FORCE     │
    │ COMPENSATING MOTOR   │
    └──────────────────────┘
               │
               ▼
        ┌─────────────┐
        │   RETURN    │
        └─────────────┘
```

FIG. 4

START

INPUT ACT ANGLE $\beta$ AND STEERING ANGLE $\theta 1$ — S21

COMPUTE TARGET ACT ANGLE $\beta*$ — S22

COMPUTE DIFFERENCE ACT ANGLE $\Delta \beta$

$(\Delta \beta = \beta* - \beta)$ — S23

COMPUTE TARGET TORQUE CONTROL AMOUNT $T_{RM}*$ OF COUNTER FORCE COMPENSATING MOTOR — S24

DRIVE-CONTROL COUNTER FORCE COMPENSATING MOTOR — S25

RETURN

FIG. 5

```
        ( START )
            │
            ▼
┌──────────────────────────────┐
│ INPUT STEERING ANGLE θ1,      │  S31
│ VEHICLE SPEED V, AND YAW RATE Y │
└──────────────────────────────┘
            │
            ▼
┌──────────────────────┐
│ COMPUTE TARGET        │  S32
│ YAW RATE Y*           │
└──────────────────────┘
            │
            ▼
┌──────────────────────┐
│ COMPUTE DIFFERENCE    │
│ YAW RATE ΔY           │  S33
│ (ΔY=Y*−Y)             │
└──────────────────────┘
            │
            ▼
┌─────────────────────────────────────────┐
│ COMPUTE TARGET TORQUE CONTROL             │
│ AMOUNT TRM* OF COUNTER FORCE              │  S34
│ COMPENSATING MOTOR                        │
│                                           │
│   TRM*                                    │
│    ▲                                      │
│    │         ╱                            │
│    │       ╱                              │
│    │    ╱                                 │
│    │  │                                   │
│    │  │                                   │
│    └──┴────────────────────► ΔY           │
│      ΔY1                                   │
└─────────────────────────────────────────┘
            │
            ▼
┌──────────────────────┐
│ DRIVE-CONTROL         │
│ COUNTER FORCE         │  S35
│ COMPENSATING MOTOR    │
└──────────────────────┘
            │
            ▼
       ( RETURN )
```

FIG. 6

```
                        ╭──────────╮
                        │  START   │
                        ╰──────────╯
                             │
                             ▼
                   ┌──────────────────┐
                   │  INPUT STEERED   │  S41
                   │  ANGLE θ2        │
                   └──────────────────┘
                             │
                             ▼
                   ┌──────────────────┐
                   │ COMPUTE STEERED  │  S42
                   │ ANGULAR VELOCITY γ│
                   └──────────────────┘
                             │
                             ▼
```

COMPUTE TARGET TORQUE CONTROL
AMOUNT TRM* OF COUNTER FORCE          S43
COMPENSATING MOTOR

```
                             │
                             ▼
                   ┌──────────────────┐
                   │  DRIVE-CONTROL   │
                   │ COUNTER FORCE    │  S44
                   │ COMPENSATING MOTOR│
                   └──────────────────┘
                             │
                             ▼
                        ╭──────────╮
                        │  RETURN  │
                        ╰──────────╯
```

FIG. 7

FIG. 8

FIG. 9

**EP 2 070 804 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004122827 A
- JP 2005225402 A
- JP 2003335248 A
- EP 1564108 A2
- JP 2005225421 A
- US 20060185928 A1
- JP 2006036124 A
- JP 2006035930 A
- JP 2006168649 A